# FASCICULE DE BREVET EUROPEEN

(11) **EP 0 769 617 B1**
(45) Date de publication et mention de la délivrance du brevet: **12.01.2000**
(21) Numéro de dépôt: 96402205.7
(22) Date de dépôt: 16.10.1996
(51) Int. Cl.: F02K 1/38, F02K 1/52, F02K 1/48, B64D 33/04

(54) **Corps caréné fixé au pylone d'un turboréacteur avec mélangeur à lobes**
Strömungskörper für den Trägermast eines Turbostrahltriebwerks mit onduliertem Mischer
Fairing for the rear part of pylon for a jet engine with a lobe mixer

(30) Priorité: 18.10.1995 FR 9512205
(43) Date de publication de la demande: 23.04.1997
(73) Titulaire: SOCIETE NATIONALE D'ETUDE ET DE CONSTRUCTION DE MOTEURS D'AVIATION Snecma, F-75015 Paris (FR)
(72) Inventeur: Dessale, Bruno Filbert, 77720 Grandpuits (FR); Duparcq, Jean-Luc Gérard, 77000 Vaux le Penil (FR); Joubert, Hugues Denis, 94220 Charenton (FR)

(56) Documents cités:
- FR-A- 2 619 858
- GB-A- 2 082 259
- GB-A- 2 112 077
- GB-A- 2 146 702
- US-A- 4 238 092
- US-A- 4 712 750
- US-A- 5 265 807
- US-A- 5 444 912

## Description

La présente invention concerne des turboréacteurs à flux mélangés supportés par des pylônes de suspension.

Le bruit des turboréacteurs, surtout ceux dits monoflux, est important. Il est de niveau d'autant plus élevé que la vitesse d'éjection des gaz est élevée.

La nécessité de réduire les niveaux de bruit des avions autour des aéroports, ainsi que pendant leurs évolutions à basses et moyennes altitudes exigent d'équiper les turbomachines pour aéronefs de dispositifs d'atténuation de bruit des gaz à l'éjection.

La diminution du niveau de bruit de jet est obtenue en augmentant la surface de contact des gaz froids et chauds, afin d'améliorer la dilution et de diminuer la vitesse d'éjection des gaz.

Il faut aussi s'efforcer de concevoir des systèmes qui ne provoquent pas de perturbations aérodynamiques trop importantes dans l'écoulement des gaz.

les dispositifs connus et utilisés actuellement sont dits à tuyaux d'orgue "à marguerite", une combinaison de ces deux dispositifs, où "à lobes" . Un tel dispositif est connu du document FR-A-2 619 858.

La présente invention concerne les turboréacteurs équipés de mélangeurs à lobes.

Dans des turboréacteurs à flux mélangés, un carter annulaire sépare un flux extérieur de gaz froid et un flux annulaire intérieur de gaz chauds venant de la turbine. Le mélangeur à lobes est disposé à l'extrémité aval du carter. Ce mélangeur à lobes est destiné à favoriser le mélange des deux flux de gaz dans la tuyère de sortie, afin de diminuer la vitesse d'éjection des gaz, et par le fait même, le bruit généré par le jet. Il présente circonférentiellement en alternance des lobes internes et des lobes externes, les lobes internes dirigeant de l'air froid vers l'axe de la tuyère et les lobes externes dirigeant du gaz chaud vers l'extérieur dans la veine du flux froid.

Lorsque le turboréacteur est supporté par la structure de l'avion au moyen d'un pylône qui relie le carter à cette structure, ce pylône traverse radialement le flux de gaz froid et le mélangeur présente au droit de ce pylône un lobe évasé.

La distribution circonférentielle des mélanges des deux flux n'est donc pas homogène, à la sortie du mélangeur, du fait de la présence de ce lobe évasé et du pylône qui se prolonge vers l'aval.

Le but de la présente invention est d'améliorer le mélange flux chaud/flux froid dans la tuyère d'éjection dans la zone du pylône, afin d'obtenir un gain de poussée et une meilleure réduction du niveau de bruit de jet.

L'invention concerne donc un turboréacteur comportant un carter annulaire qui sépare un flux extérieur de gaz froid venant du ventilateur et un flux annulaire intérieur de gaz chauds venant de la turbine, et un mélangeur à lobes, disposé coaxialement au flux de gaz chauds à l'extrémité aval dudit carter, et destiné à favoriser le mélange des deux flux de gaz, ledit turboréacteur étant supporté par un pylône auquel est fixé ledit carter et ledit mélangeur présentant circonférentiellement en alternance des lobes internes et des lobes externes, ainsi qu'un lobe évasé dans la région dudit pylône.

Selon l'invention, ce turboréacteur est caractérisé en ce qu'il est prévu un obstacle dans le flux de gaz chauds au droit du lobe évasé.

Le rôle de cet obstacle est de réduire la section des gaz chauds dans le secteur du lobe évasé, afin de favoriser globalement le mélange des deux flux en aval du mélangeur, tout en ne provoquant pas de perturbations aérodynamiques trop importantes dans l'écoulement des gaz chauds.

Selon un premier mode de réalisation, l'obstacle est constitué par un corps caréné fixé sur le pylône de suspension en aval mélangeur, et qui s'appuie sur la face intérieure du lobe évasé. Cette solution peut être utilisée sur des fabrications nouvelles ou au titre du rattrapage de matériels déjà en service.

Selon un deuxième mode de réalisation l'obstacle est formé par une excroissance de profil du pylône qui s'intègre dans le lobe évasé du mélangeur. Cette solution prévue dès l'origine sur des fabrications nouvelles s'intègre mieux et perturbe moins les profils aérodynamiques du pylône de suspension.

D'autres avantages et caractéristiques de l'invention ressortiront à la lecture de la description suivante faite à titre d'exemple non limitatif et en référence au dessin annexé dans lequel :
la figure 1 est une coupe structurale de l'arrière d'un moteur à turbine à gaz à double flux muni d'un mélangeur à lobes convolutés et suspendu par un pylône à une aile d'avion ;
la figure 2 est une vue axiale prise de l'arrière du mélangeur à lobes de la figure 1 ;
la figure 3 montre un premier mode de réalisation de l'invention selon lequel un obstacle caréné est disposé dans le lobe évasé du mélangeur et est fixé sous le pylône de suspension ;
la figure 4 montre un deuxième mode de réalisation de l'invention selon lequel le pylône de suspension comporte, dans sa partie inférieure, une excroissance qui s'intègre dans le lobe évasé du mélangeur pour constituer un obstacle dans l'écoulement des gaz chauds issus de la turbine ;
la figure 5 est une coupe transversale selon la ligne V V de la figure 3 ;
la figure 6 est une coupe transversale selon la ligne VI VI de la figure 4.

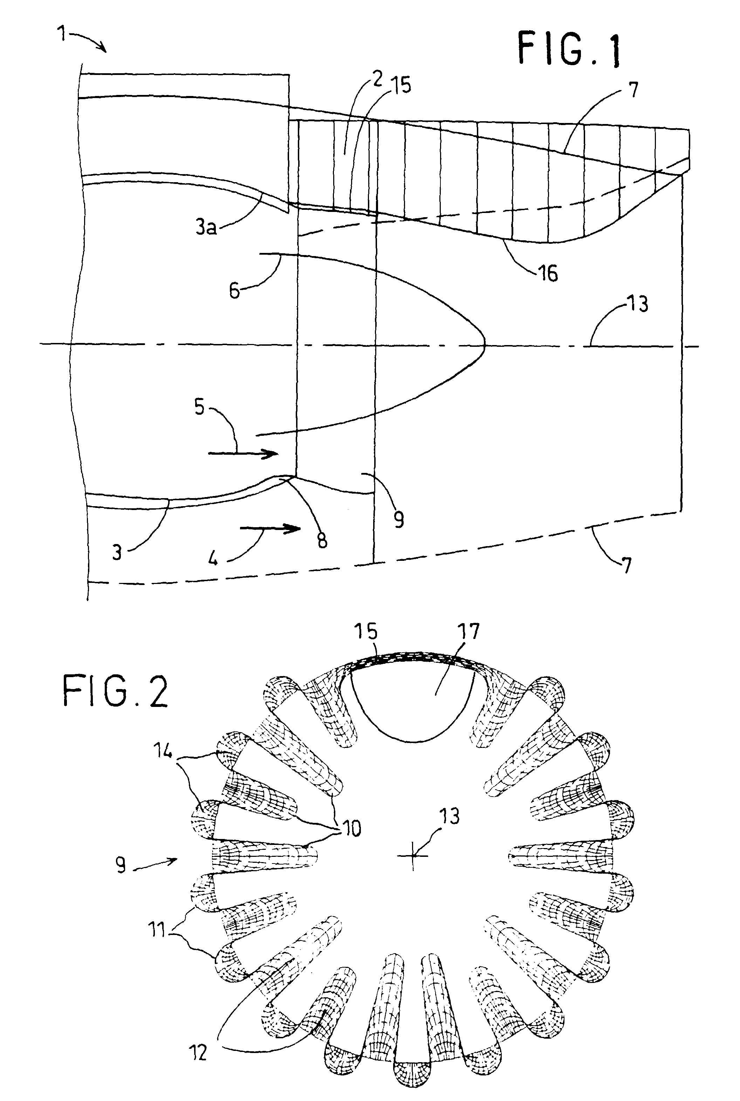

La figure 1 montre la partie arrière d'un turboréacteur 1 suspendu à l'aile d'un avion par un pylône 2.

Ce turboréacteur 1 comporte notamment un carter principal 3 qui sépare un flux extérieur 4 d'air froid et un flux annulaire intérieur 5 de gaz chauds issus de la turbine. La référence 6 représente le cône d'échappement du moteur.

Afin de mélanger les deux flux de gaz dans la tuyère d'éjection 7, et diminuer le bruit de jet, il est prévu à l'extrémité aval 8 du carter 3 un mélangeur 9 à lobes convolutés.

Ce mélangeur 9 présente en alternance des lobes internes 10 et des lobes externes 11. Les lobes internes 10 définissent des rainures externes 12 qui s'étendent vers l'axe 13 du turboréacteur et vers l'arrière de ce dernier et par lesquelles une partie du flux froid 4 est dirigée vers le centre du jet en sortie.

Le lobes externes 11 définissent des rainures internes 14 qui s'étendent vers l'arrière du turboréacteur 1 et radialement vers l'extérieur et par lesquelles une partie du flux chaud 5 est dirigée vers les zones périphériques du jet de sortie.

Le carter principal 3 est fixé de manière conventionnelle au pylône 2 dans sa partie supérieure 3a. Le mélangeur 9 présente dans sa zone supérieure de raccordements au pylône 2 un lobe évasé 15, dont le profil est sensiblement parallèle à l'axe 13 du turboréacteur 1. La référence 16 représente le profil longitudinal du pylône 2, en aval du mélangeur 9, dans la tuyère d'éjection 7. Ce profil 16 se raccorde, sans inflexion, au profil du lobe évasé 15.

Afin d'améliorer l'homogénéité du mélange des deux flux 4 et 5, et ainsi obtenir une réduction de la vitesse des gaz à la sortie de la tuyère 7 et l'abaissement du niveau sonore du moteur, en aval du lobe évasé 15, il est prévu, selon la présente invention, un obstacle 17 dans le flux de gaz chauds 5 au droit du lobe évasé 15, ainsi que cela est montré sur la figure 2.

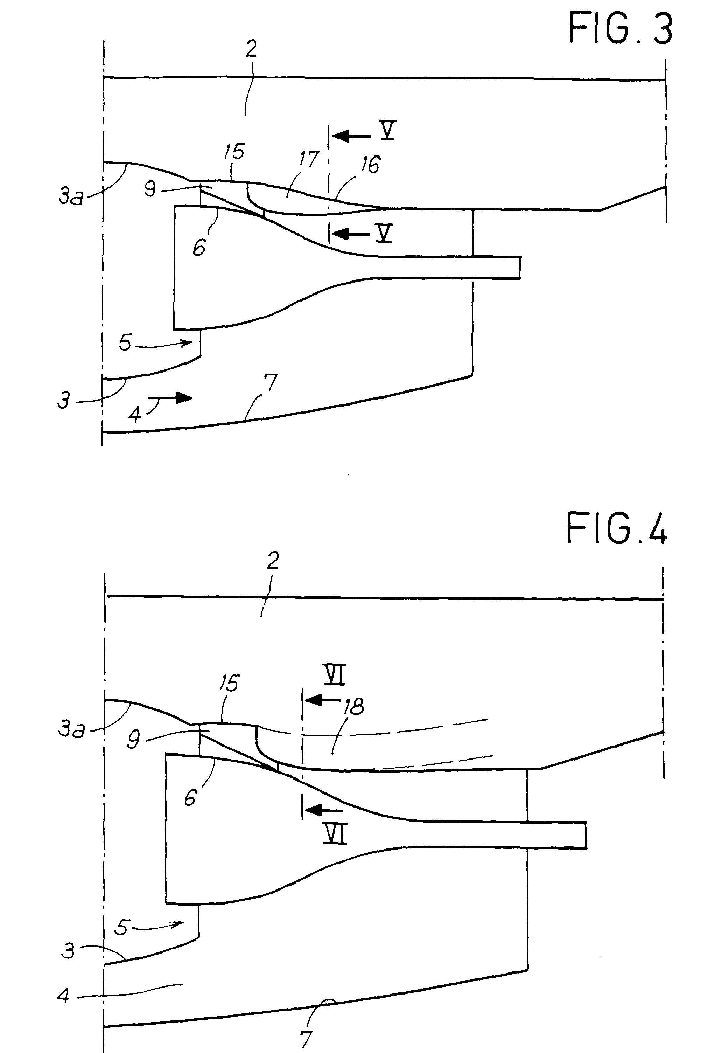

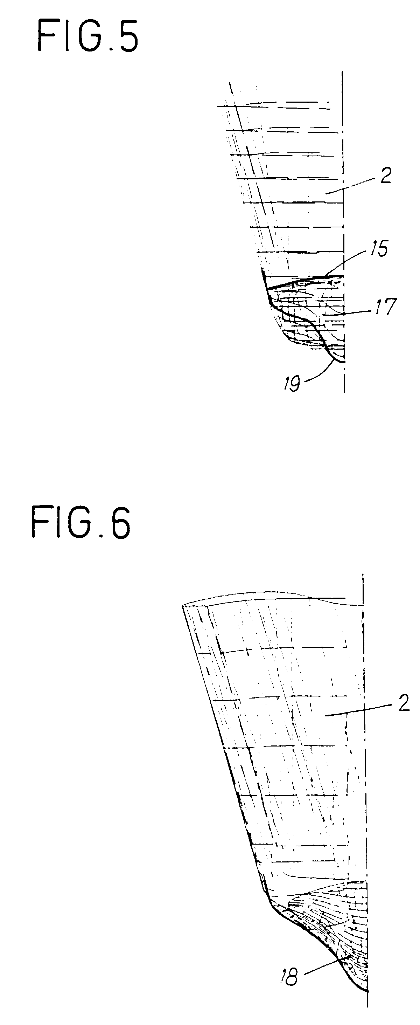

Selon un premier mode de réalisation montré sur les figures 3 et 5, l'obstacle 17 est constitué par un corps caréné qui est fixé sous le pylône 2, lequel présente un profil longitudinal 16 semblable au pylône 2 montré sur la figure 1. Le corps caréné occupe partiellement le volume délimité par le lobe évasé 15, afin de réduire dans cette zone la section de passage des gaz chauds 5 à une valeur proche de celles des lobes adjacents. Cette solution peut être utilisée sur des fabrications nouvelles ou au titre de rattrapage des matériels déjà en service. Selon la géométrie du lobe évasé 15, le corps évasé 17 s'appuie sur la face inférieure du lobe évasé 15. La référence 19 représente le contour du corps caréné à la sortie du mélangeur 9.

Selon un deuxième mode de réalisation montré sur les figures 4 et 6, le profil aérodynamique du pylône 2 est modifié dès l'origine. Dans ce cas, le pylône 2 incorpore une excroissance 18 qui s'intègre dans le lobe évasé 15 du mélangeur 9 pour réduire la section de passage des gaz chauds 5 au droit du pylône 2 et favoriser le mélange des deux flux 4 et 5 en aval du mélangeur 9. Cette solution perturbe moins les profils aérodynamiques du pylône de suspension 2.

## Revendications

1. Turboréacteur comportant un carter annulaire qui sépare un flux extérieur (4) de gaz froid et un flux annulaire intérieur (5) de gaz chauds venant de la turbine, et un mélangeur à lobes (9), disposé coaxialement au flux de gaz chauds (5) à l'extrémité aval (8) dudit carter (3), et destiné à favoriser le mélange des deux flux de gaz (4, 5), ledit turboréacteur étant supporté par un pylône (2) par l'intermédiaire dudit carter (3), ledit mélangeur (9) présentant circonférentiellement en alternance des lobes internes (10) et des lobes externes (11), et comportant un lobe évasé (15) dans la région dudit pylône de suspension (2),
caractérisé par le fait qu'il est prévu un obstacle (17) dans le flux (5) de gaz chauds au droit du lobe évasé (15).

2. Turboréacteur selon la revendication 1, caractérisé par le fait que l'obstacle (17) est constitué par un corps caréné fixé sur le pylône de suspension (2) en aval du mélangeur (9).

3. Turboréacteur selon la revendication 2, caractérisé par le fait que le corps s'appuie sur la face intérieure du lobe évasé (15) du mélangeur (9).

4. Turboréacteur selon la revendication 1, caractérisé par le fait que l'obstacle (17) est formé par une excroissance de profil (18) du pylône (2) qui s'intègre dans le lobe évasé (15) du mélangeur (9).

## Patentansprüche

1. Turbostrahltriebwerk mit einem ringförmigen Gehäuse, das einen Mantelstrom (4) kalter Gase und einen inneren Ringstrom (5) von der Turbine kommender heißer Gase voneinander trennt, und mit einem ondulierten Mischer (9), der koaxial zu dem Strom (5) heißer Gase am hinteren Ende (8) dieses Gehäuses (3) angeordnet ist und dazu vorgesehen ist, das Vermischen der beiden Gasströme (4, 5) zu fördern, wobei dieses Turbostrahltriebwerk über dieses Gehäuse (3) von einem Trägermast (2) gehalten wird, wobei dieser Mischer (9) an seiner Außenlinie abwechselnd Innenwellen (10) und Außenwellen (11) aufweist und im Bereich des genannten Trägermasts (2) eine aufgeweitete Welle (15) aufweist,
**dadurch gekennzeichnet, daß** in dem Strom (5) heißer Gase im Bereich der aufgeweiteten Welle (15) ein Hindernis (17) vorgesehen ist.

2. Turbostrahltriebwerk nach Anspruch 1, **dadurch gekennzeichnet, daß** das Hindernis (17) aus einem Strömungskörper besteht, der an dem Trägermast (2) hinter dem Mischer (9) angebracht ist.

3. Turbostrahltriebwerk nach Anspruch 2, **dadurch gekennzeichnet, daß** der Körper an der Innenseite der aufgeweiteten Welle (15) des Mischers (9) anliegt.

4. Turbostrahltriebwerk nach Anspruch 1, **dadurch gekennzeichnet, daß** das Hindernis (17) aus einer Profilprotuberanz (18) des Trägermasts (2) besteht, die sich in die aufgeweitete Welle (15) des Mischers (9) einfügt.

## Claims

1. A turbojet engine comprising an annular casing, which separates a cold outer gas flow (4) from a hot inner gas flow (5) coming from the turbine, and a lobe type mixer (9) disposed coaxially of the hot gas flow (5) at the downstream end (8) of the casing (3) and serving to promote the mixing of the two gas flows (4, 5), the engine being carried by a pylon (2) by way of the casing (3), the mixer (9) having in alternate relationship around its periphery internal lobes (10) and external lobes (11) and comprising a flared lobe (15) near the pylon (2),
characterised in that an obstacle (17) is provided in the hot gas flow (5) at the flared lobe (15).

2. An engine according to claim 1, characterised in that the obstacle (17) is a faired member secured to the pylon (2) downstream of the mixer (9).

3. An engine according to claim 2, characterised in that the faired member bears on the the inside surface of the flared lobe (15) of the mixer (9).

4. A engine according to claim 1, characterised in that the obstacle (17) is in the form of a lengthwise bulge (18) of the pylon (2), the bulge merging into the flared lobe (15) of the mixer (9).
